# EUROPEAN PATENT APPLICATION

(11) **EP 4 335 736 A1**
(43) Date of publication of application: **13.03.2024**
(21) Application number: 23195524.6
(22) Date of filing: 05.09.2023
(51) Int. Cl.: B62K 9/00

(54) **BYCICLE FOR RIDE PRACTICE AND BIKE FRAME THEREFOR**

(30) Priority: 09.09.2022 JP 2022144213
(71) Applicant: Vitamin I Factory Co., Ltd., Tokyo 154-0013 (JP)
(72) Inventor: WATANABE, MIKIO, TOKYO 154-0013 (JP)
(74) Representative: Durán-Corretjer, S.L.P.

(57) **Abstract**

A ride-practicing bicycle includes: a pedal unit (200); a bicycle frame (100) having a receiving portion (110) for detachably receiving the pedal (240); a rear wheel (300) having a sprocket;
a chain (500), wherein the pedal unit (200) includes a rotatably mounted pedal crank (220) to which a chain wheel (351) is attached and has a connecting portion (230) that is connected to the receiving portion (110) of the bicycle frame (100), and the chain (500) bridges and engages the chain wheel (351) and the sprocket of the rear wheel (300), whereby the pedal unit (200) and the chain (500) are removably installed in the bicycle frame (100), and wherein the bicycle frame (100) has a seat stay (150, 350, 550) on a side of the chain wheel (351), and an entirety or a portion of the seat stay (150, 350, 550) is configured to be removable from the bicycle frame (100) so as to facilitate attachment and removal of the pedal unit (200) and the chain (500) to and from the bicycle frame (100).

## Description

### BACKGROUND OF THE INVENTION

### Technical Field

The present invention relates to a ride-practicing bicycle, i.e., a bicycle for ride practice, and a bicycle frame with a detachable chain and pedal unit for ride practicing.

### Background Art

Conventionally, bicycles having removable pedal units have been developed and used. The purpose of being able to remove the pedal unit from the bicycle is mainly for practicing bicycle riding. Specifically, the unit main body including the chain wheel and pedal crank is made detachable from the bicycle main body with bolts or the like so as to make the pedal unit removable by bolts and nuts (see Patent Document 1).

With this configuration, especially when a child rides a bicycle for the first time, he/she can learn steering wheel operation technique and sense of balance by kicking the ground with the legs while the unit main body is removed, and when the child can ride to some extent, the unit main body can be attached to the bicycle body so that the child can practice bicycling by pushing the pedal connected to the pedal crank to advance the bicycle forward.

### Related Art Document

### Patent Document

Patent Document 1: Japanese Patent Application Laid-Open Publication No. 2013-147199

### SUMMARY OF THE INVENTION

When the bicycle does not have seat stays, the pedal unit and chain can be easily attached and detached, but in the case of bicycles that have seat stays, it is necessary to remove the rear wheel from the main body in order to attach the chain, making it difficult to attach and detach the pedal unit and the chain.

In order to solve the above problem, the present invention aims to provide a ride-practicing bicycle and a bicycle frame that allow easy attachment and detachment of the chain and the pedal unit even in a bicycle with seat stays.

Additional or separate features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, in one aspect, the present disclosure provides a ride-practicing bicycle, comprising: a pedal unit; a bicycle frame having a receiving portion for receiving the pedal unit at a portion of a seat tube of the bicycle frame; a rear wheel having a sprocket; a chain installed to be coupled with the pedal unit and the rear wheel, wherein the pedal unit includes a rotatably mounted pedal crank to which a chain wheel is attached and has a connecting portion that is removably connected to the receiving portion of the bicycle frame, and the chain bridges and engages the chain wheel and the sprocket of the rear wheel, whereby the pedal unit and the chain are removably installed in the bicycle frame, and wherein the bicycle frame has a seat stay on a side of the chain wheel, and an entirety or a portion of the seat stay is configured to be removable from the bicycle frame so as to facilitate attachment and removal of the pedal unit and the chain to and from the bicycle frame.

According to this configuration, the seat stay on the side to which the chain wheel is connected has a detachable portion that can be removed from the seat stay or the entirety of the seat stay is removable, so that the chain and the pedal unit can be easily attached and detached even in a ride-practicing bicycle having a seat stay.

In the above configuration, the removable entirety or portion of the seat stay may create a gap greater than a width of the chain when removed so as to allow passage of the chain through the gap. Further, the removable entirety or portion of the seat stay may have a protrusion protruding towards the rear wheel in a plan view.

In the above construction, the bicycle frame may have a chain stay that rotatably supports the rear wheel on at least a side of the pedal unit. Further, a branch portion extending obliquely forward and upward may be provided on the chain stay on the side of the rear wheel, and a rear end of the seat stay may be detachably fixed to the branch portion. According to this configuration, the seat stay can be easily attached and detached by setting the branch portion at a position and in shape that facilitates attachment and detachment.

In the above configuration, the pedal unit may further include a chain cover that covers the chain, and the branch portion may be provided outside the chain cover so as to overlap the chain cover in a side view. According to this configuration, by sandwiching the chain cover with the branch portion, an effect of improving the strength can be expected.

In the above configuration, the pedal unit may further include a chain cover that covers the chain, and the chain cover may have a through hole through which the chain stay is inserted from an outside rear side to an inside front side of the chain cover. According to this configuration, the chain cover can be easily attached by attaching the chain stay through the through hole.

In the above structure, the chain cover may be separable into two pieces in a longitudinal direction, and the through hole may be formed across the separable two pieces of the chain cover. According to this configuration, the chain cover can be separated int a front part and a rear part so that the chain cover can be attached more easily.

In the above construction, a rear end of the seat stay may be fixed to an axle of the rear wheel. According to this configuration, the number of parts can be reduced by using the axle for fixing the seat stay.

In the above configuration, the rear end of the seat stay may be provided with an elongated slot that opens rearward, and a fixing member provided in the elongated hole may fix the rear end of the seat stay onto the axle of the rear wheel. According to this configuration, the rearwardly open elongated slot facilitates adjustment when attaching the seat stay.

In the above configuration, the pedal unit may further include a chain cover that covers the chain, and the seat stay may be attached to an outside of the chain cover. According to this configuration, the chain cover can be stabilized by sandwiching it with the seat stay.

In the above configuration, the diameter of the chain wheel may be larger than the diameter of the rear sprocket. Also, the seat stay may be interchangeable according to a diameter of the chain wheel.

In another aspect, the present disclosure provides a bicycle frame to which a pedal unit and a chin are removably mounted, wherein the bicycle frame has a seat stay on a side at which a chain wheel is to be installed, and an entirety or a portion of the seat stay is configured to be removable from the bicycle frame so as to facilitate attachment and removal of the pedal unit and the chain to and from the bicycle frame. According to this configuration, the seat stay on the side to which the chain wheel is connected has a detachable portion that can be removed from the seat stay, or the entire seat stay may be removable, so that the chain and the pedal unit can be easily attached and detached even in a ride-practicing bicycle having a seat stay.

According to the ride-practicing bicycle and bicycle frame according to the present invention, the chain and the pedal unit can be easily attached and detached even in a bicycle having seat stays. Note that the effects described here are not necessarily limited thereto, and may have any of the effects described in this specification.

It is to be understood that both the foregoing general description and the following detailed description are exemplary and explanatory, and are intended to provide further explanation of the invention as claimed.

### BRIEF DESCRIPTION OF THE DRAWINGS

FIG. 1 a side perspective view of a ride-practicing bicycle according a first embodiment of the present invention.
FIG. 2 is an exploded view of the ride-practicing bicycle according to the first embodiment of the present invention.
FIG. 3 is a side perspective view of the ride-practicing bicycle according to the first embodiment of the present invention with a pedal unit and a chain removed.
FIG. 4 is a rear perspective view of the ride-practicing bicycle according to the first embodiment of the present invention, showing a connection portion of a seat stay.
FIG. 5 is a side perspective view showing a seat stay connecting structure of a ride-practicing bicycle according to a modified example of the first embodiment of the present invention.
FIG. 6 is a side perspective view of the ride-practicing bicycle according to the modified example of the first embodiment of the present invention with the seat stay removed.
FIG. 7 is a rear perspective view showing a connecting portion of the seat stay of the ride-practicing bicycle according to the modified example of the first embodiment of the present invention.
FIG. 8 is a side perspective view showing the inside of the pedal unit of the ride-practicing bicycle according to the first embodiment of the present invention.
FIG. 9 is a rear perspective view showing a connecting portion of a seat stay of a ride-practicing bicycle according to a second embodiment of the present invention.
FIG. 10 is a side perspective view showing the inside of the pedal unit of the ride-practicing bicycle according to the second embodiment of the present invention.
FIG. 11 is a side view showing a connecting portion of a pedal unit of the ride-practicing bicycle according to the second embodiment of the present invention.
FIG. 12 is a side perspective view of a ride-practicing bicycle according to a third embodiment of the present invention.
FIG. 13 is a side perspective view of the ride-practicing bicycle according to the third embodiment of the present invention with a part of the seat stay removed.
FIG. 14 is an enlarged view showing a connecting portion of a seat stay of the ride-practicing bicycle according to the third embodiment of the present invention.
FIG. 15 is an enlarged view showing the connection portion of a seat stay from which a part of the seat stay of the bicycle according to the third embodiment of the present invention is removed.

### DETAILED DESCRIPTION OF EMBODIMENTS

Preferred embodiments for carrying out the present invention will be described below with reference to the drawings. The embodiments described below are examples of representative embodiments of the present invention, which do not limit the scope of the present invention, and various combinations, modifications, and alterations are possible within the scope of the gist of the present invention.

### <First Embodiment>

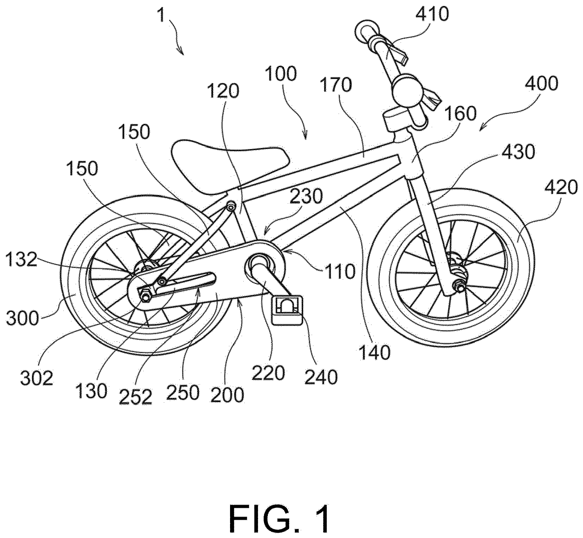

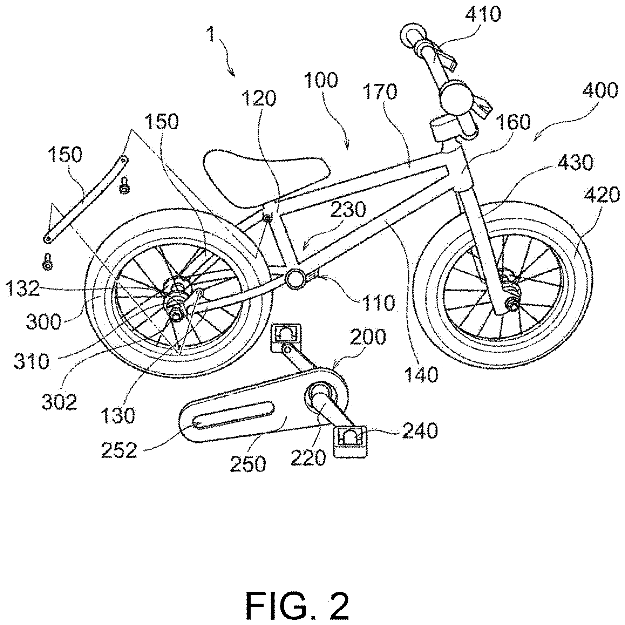

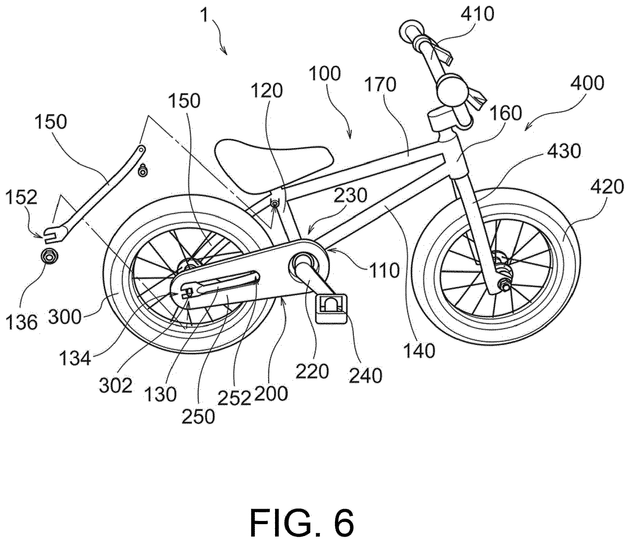

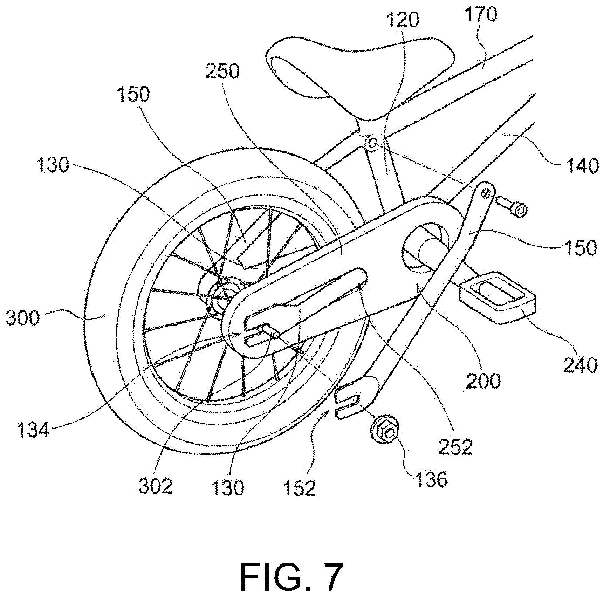

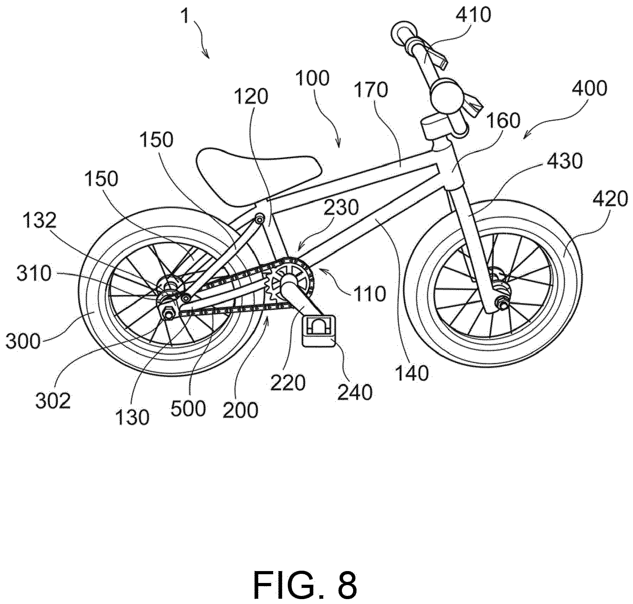

A ride-practicing bicycle 1 according to a first embodiment of the present invention will be described with reference to FIGs. 1 to 8.

As shown in FIGS. 1, 2, and 8, the ride-practicing bicycle 1 according to the present embodiment is composed of a bicycle frame 100, a pedal unit 200, a rear wheel 300, a handle portion 400 having a front wheel 420, and a chain 500. By making a seat stay 150 detachable, the chain 500 and the pedal unit 200 can be easily detached from the bicycle frame 100.

The bicycle frame 100 is a member that constitutes the main body of the ride-practicing bicycle 1 of the present embodiment, and as shown in FIGs. 1, 2, and 8. The bicycle frame 100 includes a seat tube 120, chain stays 130, a down tube 140, and seat stays 150. In this embodiment, a head tube 160 is installed in front of the down tube 140, and a handle portion 400 is installed so as to be rotatable to the left and right. A top tube 170 connecting the upper portion of the seat tube 120 and the front portion of the down tube 140 may be installed.

Although the bicycle frame 100 is made of iron in this embodiment, it is not limited to this, and it is possible to use aluminum, chrome molybdenum, carbon, titanium, resin, or any other material with sufficient strength in order to reduce weight.

A receiving portion 110 is installed on the bicycle frame 100. The receiving portion 110 is a member for connecting the pedal unit 200, and as shown in FIG, the receiving portion 110 is fixedly installed on the lower part of the seat tube 120 so as to connect the pedal unit 200 to the bicycle frame 100 detachably with a bolt.

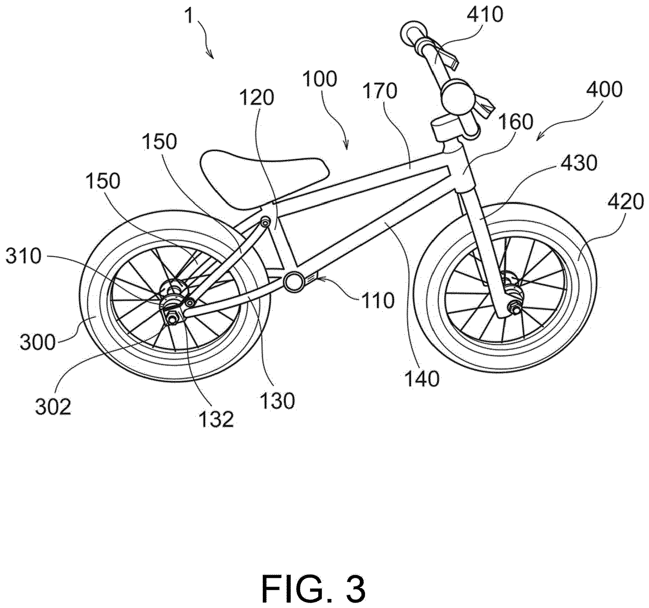

The receiving portion 110 may be configured to be fixedly installed on a portion that intersects the seat tube 120 at a lower portion of the down tube 140 instead of the seat tube 120. In addition, since the receiving portion 110 is a member on which pedaling force is concentrated when the user rides the bicycle and pedals, it is desirable that the receiving portion 110 be a sturdy member and firmly connected to the bicycle frame 100. In this embodiment, the receiving portion 110 is made of the same iron as the bicycle frame 100, but it is not limited to this, and in order to reduce weight, aluminum, chrome molybdenum, carbon, titanium, resin, or other materials having sufficient strength can be appropriately selected and used. As a variation of the specific configuration of the receiving portion, the receiving portion 110 may be a substantially cylindrical hollow member extending below the saddle, and a pedal unit having a unit-side connection portion inserted into the hollow member may be attached (see JP-A-2013-147199, paragraphs [0017] to [0020] and FIG. 3). In addition, the receiving portion may have a gear part that can be engaged with the crank such that a crank may be inserted into the gear part to rotate the pedal (International Publication No. 2018-216676, paragraphs [0050] to [0054] and FIG. 1 to FIG. 2 and FIG. 8 to FIG. 9).

The rear wheel 300 is attached to the rear end of the chain stay 130. A rear sprocket 310 on which the chain 500 for transmitting the rotational power of the pedal crank 220 is mounted is attached to the rear wheel 300. The handlebar portion 400 including a front fork 430 to which a handlebar 410 and a front wheel 420 are attached is attached to the front portion of the down tube 140 via a head tube 160.

The pedal unit 200 is a unit that includes a pedal 240, a pedal crank 220, a chain wheel, and a chain cover 250 that are detachably attached to the bicycle frame 100, and is detachably connected to the receiving portion 110 in this embodiment. The chain 500 is installed between the chain wheel of pedal unit 200 and the rear sprocket 310 of rear wheel 300. The chain cover 250 that covers the chain 500 is not an essential component of the pedal unit 200, but is desirable in order to protect the chain 500 and prevent accidental contact between the operator and the chain.

The pedal unit 200 of the ride-practicing bicycle 1 according to the present embodiment is configured to rotatably hold the pedal crank 220 to which the chain wheel is attached, and to have a connecting portion 230 for detachably connecting to the receiving portion 110 fixedly connected to the bicycle frame 100.

The main body of the pedal unit 200 rotatably holds the pedal crank 220 to which the chain wheel is attached, and is connected to the bicycle frame 100. The main body of the pedal unit 200 is equipped with a connecting portion 230. The connecting portion 230 is a member for connecting and fixing the pedal unit 200 to the bicycle frame 100, and is configured to be connected to the receiving portion 110 provided on the bicycle frame 100 in this embodiment.

Although the connecting portion 230 is welded to the pedal unit 200 in this embodiment, it is not limited to this, and may be integrally formed. In addition, the connecting portion 230 is made of the same iron as the bicycle frame 100 in order to maintain strength, but is not limited to this, and can be made of aluminum, chrome molybdenum, carbon, titanium, resin, or any other material having sufficient strength in order to reduce weight.

In this embodiment, the receiving portion 110 and the connecting portion 230 are fixed with bolts. Specifically, a bolt is inserted into holes (not shown) drilled in the receiving portion 110 and the connecting portion 230, respectively, and fastened together with a nut. Either the hole drilled in the receiving portion 110 or the connecting portion 230 can be an elongated hole. As a result, the tension of the chain 500 installed between the chain wheel and the rear sprocket 310 can be increased or decreased.

With the above configuration, the pedal unit 200 and the chain 500 can be detachably attached to the bicycle frame 100.

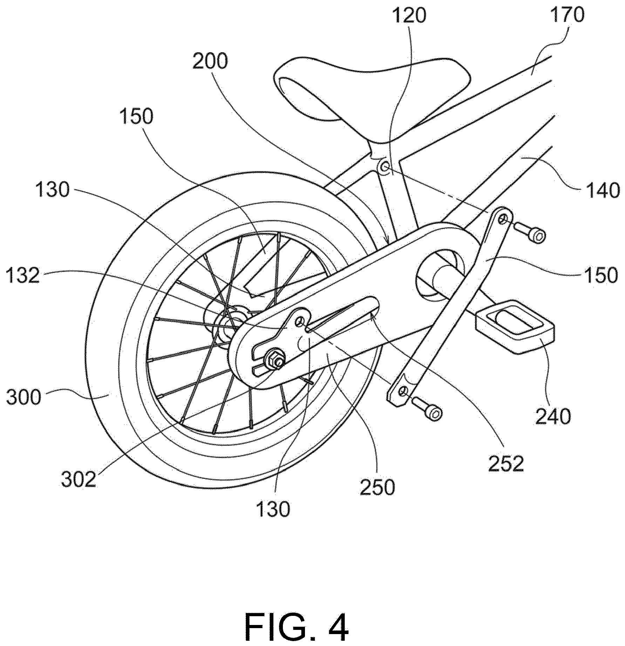

In this embodiment, the bicycle frame 100 is equipped with a pair of left and right chain stays 130, as shown in FIGs. 1 to 4. The chain stays 130 sandwich the rear wheel 300 from the left and right, and the wheel 300 is rotatably fixed at the tip portions of the chain stays 130. A branch portion 132 extending obliquely forward and upward is provided on the rear wheel side of the chain stay 130, and the rear wheel 300 side of the seat stay 150, which will be described later, is fixed to the branch portion 132 (see FIG. 4). By setting the branch portion 132 at a position and in shape that facilitates attachment and detachment work, the attachment and detachment work of the seat stay 150 is made easy. It should be noted that the chain stay 130 may be a one-arm type in which it is provided only on one side. When the chain stay 130 is provided only on one side, it is preferable to provide the chain stay 130 on the side of the chain wheel.

In this embodiment, the bicycle frame 100 includes seat stays 150 extending between the chain stays 130 and the upper portion of the seat tube 120. The seat stay 150 provided in the ride-practicing bicycle 1 according to the present embodiment has a configuration in which one of the left and right seat stays is detachably connected. In this embodiment, the seat stay 150 on the side of the chain wheel is detachably connected to the bicycle frame 100, and the seat stay 150 on the opposite side is fixed to the chain stay 130 and the seat tube 120 by welding or the like. With this configuration, it is possible to easily attach and detach the pedal unit and the chain as described below. In this embodiment, the seat stays 150 are provided on both sides of the rear wheel 300 as described above, but the seat stay 150 may be provided at least on the chain wheel side (in the following description, the term "seat stay 150" refers to the detachable seat stay 150 provided on the chain wheel side).

Conventionally, among children's bicycles, there have been products with a detachable pedal unit as a ride-practicing bicycle. With this ride-practicing bicycle for children that does not have seat stays, it was relatively easy to attach and detach the pedal unit and the chain. However, if seat stays are present due to design considerations or the like, even when a detachable pedal unit is provided, the seat stay interferes with removal of the chain, making it difficult to remove.

By adopting the configuration of the present embodiment, it is possible to easily attach and detach the pedal unit and the chain by removing the seat stay 150 on the side of the chain wheel even on a bicycle with seat stays.

In this embodiment, as shown in FIGs. 1 to 4, the seat stay 150 is detachably connected at both ends between the rear wheel 300 side of the chain stay 130 and the upper portion of the seat tube 120, so that the entire seat stay 150 is detachable. Specifically, the connection hole drilled in the branch portion 132 on the rear wheel 300 side of the chain stay 130, the connection hole provided on the upper side of the seat tube 120, and the connection holes provided on both ends of the seat stay 150 are fixed with bolts and nuts, respectively. Here, the branch portion 132 is provided outside the chain cover 250 so as to overlap the chain cover 250 when viewed from the side of the bicycle frame 100, and by sandwiching the chain cover 250 with the branch portion 132, an effect of improving strength can be expected. Moreover, by attaching the seat stay 150 to the outside of the chain cover 250 and sandwiching the chain cover 250 with the seat stay 150, the entire system can be stabilized. Furthermore, since the entire seat stay 150 is detachable and no cut is provided in the middle, the strength of the bicycle frame 100 when the seat stay 150 is attached can be improved.

Here, the chain cover 250 is provided with a through-hole 252 through which the chain stay 130 penetrates, and the chain stay 130 is inserted into the through-hole 252 from the outside rear to the inside front of the chain cover 250. Attaching the chain stay 130 via the through hole 252 facilitates attachment of the chain cover 250. Furthermore, in this embodiment, the chain cover 250 may be configured to be separable in the front-rear direction, and the through hole 252 is formed across the separated portions of the chain cover 250. In this case, since the chain cover 250 is separable in the front-rear direction, attachment of the chain cover (insertion of the chain stay 130 into the through-hole 252) is further facilitated.

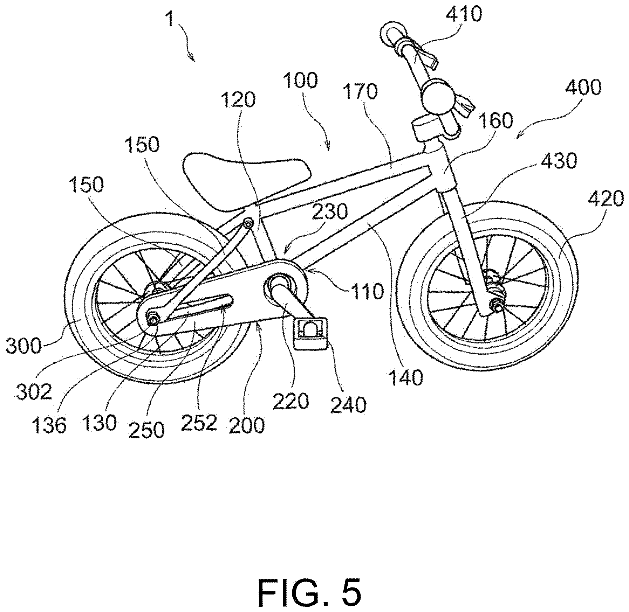

As a modification of this embodiment, as shown in FIGs. 5 to 7, an end (rear wheel side) of the chain stay 130 can be fixed together with the seat stay 150 with a nut using the axle 302 of the rear wheel 300. Specifically, a rear end of the chain stay 130 is provided with an elongated slot 134 that opens rearward, and a fixing member (a nut 136 in this embodiment) provided in the elongated slot 134 fixes the rear end of the chain stay 130 onto the axle 302 of the rear wheel 300 (a thread is formed in the axle 302 so that it can be engaged with the nut 136). Similarly, the rear end of the seat stay 150 is provided with an elongated slot 152 that opens rearward, and the rear end of the seat stay 150 is fixed onto the axle 302 of the rear wheel 300 by the fixing member (the nut 136 in this embodiment) provided in the elongated slot 152. In other words, the axle 302 passes through both the long slot 134 of the chain stay 130 and the long slot 152 of the seat stay 150, and the chain stay 130 and the seat stay 150 are fixed together by tightening the nut 136. Here, the rear wheel 300 side portions of the chain stay 130 and the seat stay 150 are configured to have a flat plate shape so that they can be easily fixed with a nut. In addition, the elongated slots that are open rearward facilitate position adjustment when attaching the chain stay 130 and the seat stay 150. In this embodiment, the seat stay 150 is attached at both ends so that the entire seat stay 150 is detachable, but only a portion of the seat stay 150 may be configured to be detachable.

In this embodiment, the seat stay 150 is made of the same iron as the bicycle frame 100, but it is not limited to this, and it is possible to use aluminum, chrome molybdenum, carbon, titanium, resin, or other materials having sufficient strength in order to reduce weight.

By using the bicycle and bicycle frame according to the present embodiment, it has become possible to easily attach and detach pedals to bicycle frames of various shapes without narrowing the design possibilities, including diamond-shaped frames having an excellent balance between strength and weight reduction. In addition, it is possible to provide bicycles and bicycle frames that can be used by a wide range of people, even bicycle frames of various sizes, from children to adults, that can be used as ride-practicing bicycles.

### <Second embodiment>

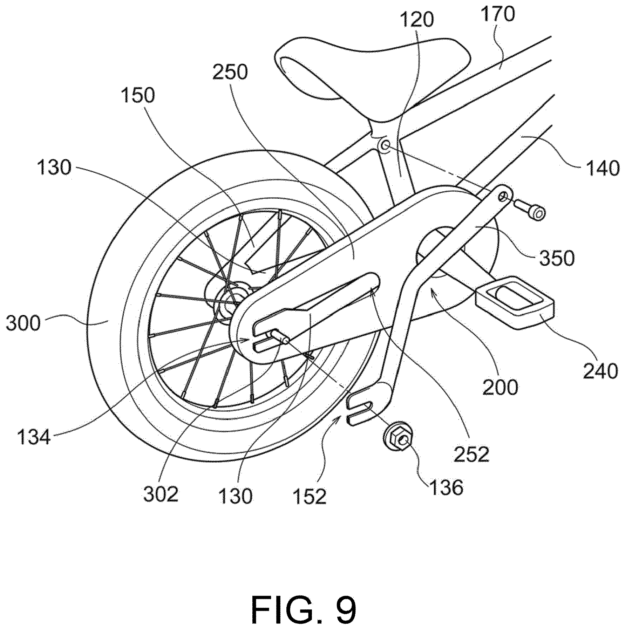

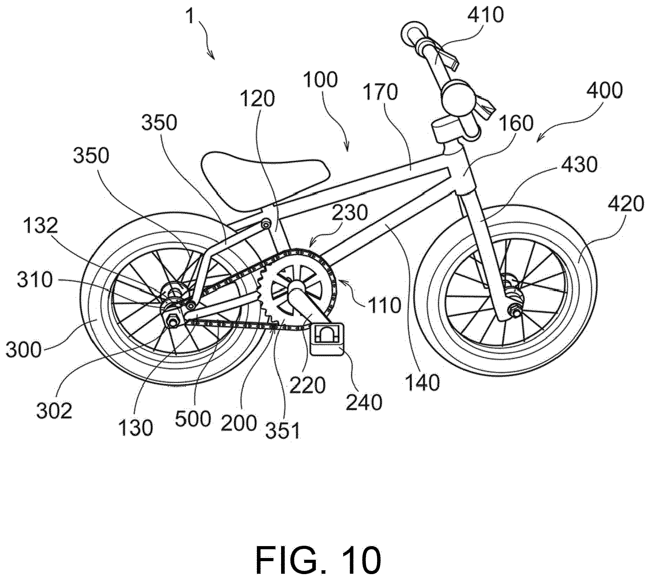

A ride-practicing bicycle according to a second embodiment of the present invention will be described with reference to FIGs. 9 and 10. FIG. 9 is a rear perspective view showing the connecting portion of the seat stay of the ride-practicing bicycle according to this embodiment. FIG. 10 is a side perspective view showing the inside of the pedal unit of the ride-practicing bicycle according to this embodiment.

The ride-practicing bicycle according to this embodiment differs from the ride-practicing bicycle 1 of the first embodiment in that the diameter of the chainwheel is larger, and the seat stay is configured so as to be detachable in accordance with the larger diameter of the chainwheel to avoid interference. Other configurations of the ride-practicing bicycle according to this embodiment are the same as those of the ride-practicing bicycle 1 of the first embodiment.

As shown in FIGs. 9 and 10, the ride-practicing bicycle according to this embodiment is equipped with a chain wheel 351 having a larger diameter. In the ride-practicing bicycle according to this embodiment, a chain wheel 351 having a smaller diameter, as in the ride-practicing bicycle 1 of the first embodiment, may be installed at first, and may be replaced with a chain wheel 351 having a larger diameter according to the body size of the child.

Furthermore, the ride-practicing bicycle of the present embodiment is equipped with a seat stay 350 that has a dogleg shape protruding upward on the bicycle when viewed from the side. The ride-practicing bicycle according to this embodiment may be initially equipped with a straight seat stay 150 as in the ride-practicing bicycle 1 of the first embodiment, and depending on the diameter of the chain wheel 351 to be replaced with, the seat stay 350 can be replaced with an appropriate shaped seat stay 350 shown in FIGs. 9 and 10 to avoid interference. It should be noted that the seat stay 350 may also be used from the beginning when a smaller diameter chain wheel is attached, and/or may have an arcuate shape when viewed from the side.

According to the ride-practicing bicycle according to the present embodiment, as described above, in addition to the advantages of the ride-practicing bicycle 1 of the first embodiment, the chain wheel can be replaced according to the physical growth of the child using the bicycle. In the past, it was common to replace a bicycle itself in a short period of time as the child grew up, but by making the chain wheel replaceable in this way, it is possible to use the same bicycle for a long time, thereby making the bicycle sustainable. In particular, if the child's strength is weak, it is desirable to use a smaller chain wheel that is easier to ride initially, but it is desirable to replace it with a larger chain wheel that is easier to speed up as the child grows. When switching to a bicycle with large wheels, it becomes difficult to balance, but by replacing only the chain wheel, it is possible to realize a bicycle that is easy to move over long distances while being a small bicycle that is easy to handle, low in the center of gravity and easy to balance like a small wheel bicycle.

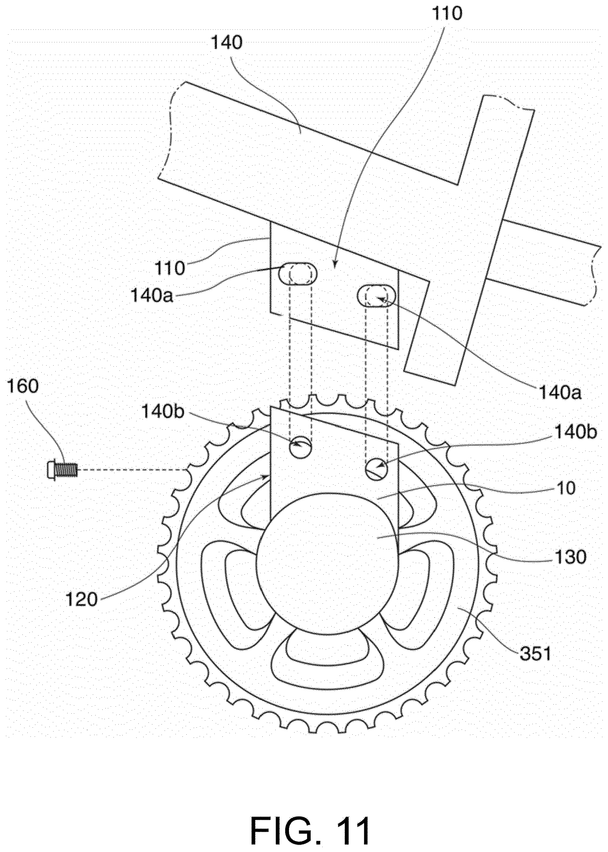

In bicycles where the chainwheel can be replaced in this way, it is desirable to fine-tune the distance between the rear sprocket and the chainwheel according to the length of the chain after replacement. Therefore, it is desirable to have a slide adjustment mechanism as shown in FIG. 11. As shown in FIG. 11, the receiving part side connecting holes 140a are formed as elongated holes (oval shape) so as to be able to slide and adjust in a substantially horizontal direction, and the connecting part side connecting holes 140b are formed in a circular shape.

The unit receiving portion 110 connected to the frame and a unit connecting portion 120 connected to the chain wheel 351 are screwed with bolts through the pair of joint holes formed as described above. As a result, the unit main body (i.e., the pedal unit and the chain) may be slid forward and backward along the long holes with the bolts loosened, and the unit main body is fixed by tightening the bolts at an appropriate position, thereby enabling slide adjustment. Further, a screw 160 is rotatably screwed to the tip of the unit connecting portion 120. When the screw 160 is rotated and inserted, the tip portion of the screw 160 contacts and presses the unit receiving portion 110. As a result, the unit main body can be slidably moved, and the front-rear position of the unit main body with respect to the bicycle main body 10 can be finely adjusted by pressing the rotating screw 160.

### <Third Embodiment>

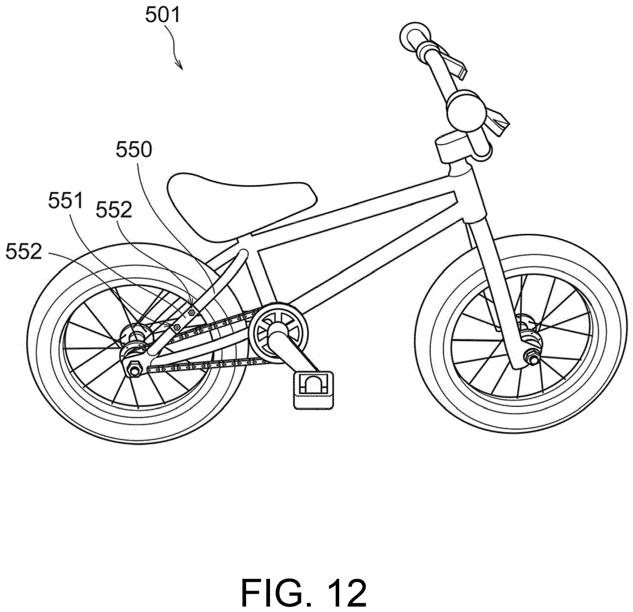

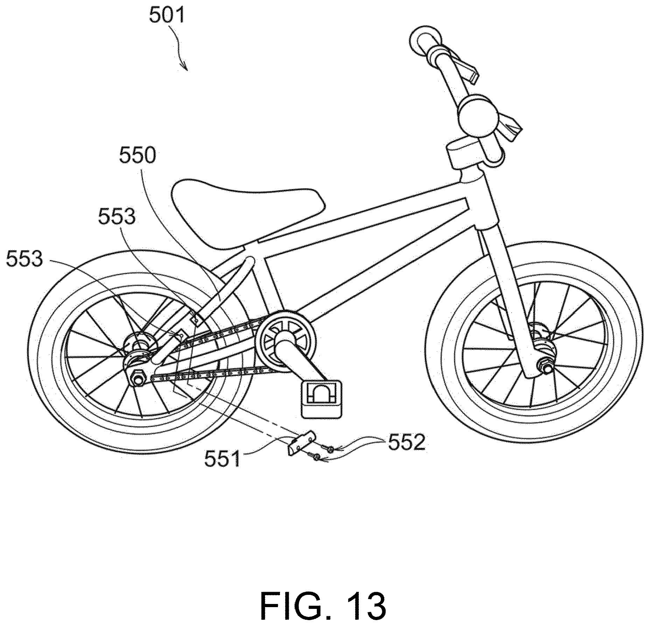

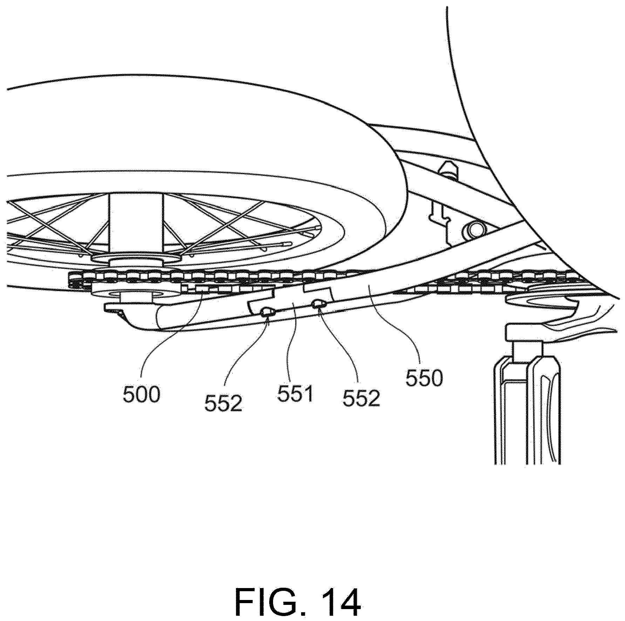

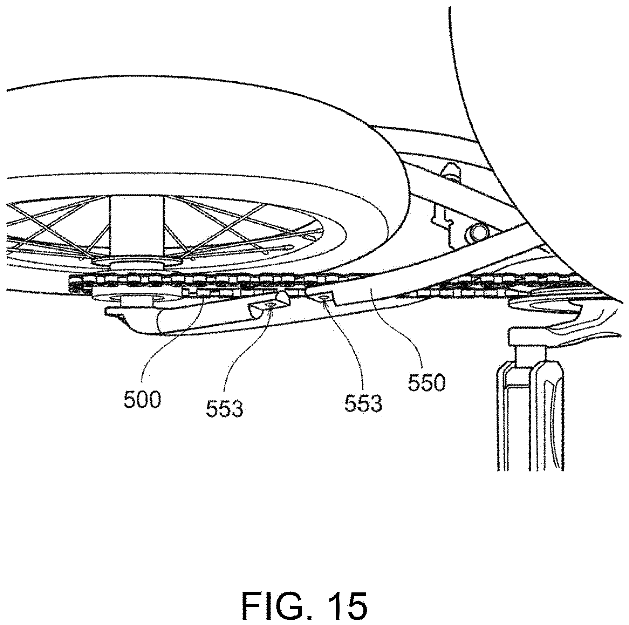

A ride-practicing bicycle 501 according to a third embodiment of the present invention will be described with reference to FIGs. 12 to 15. FIG. 12 is a side perspective view of the ride-practicing bicycle according to this embodiment. FIG. 13 is a side perspective view of the ride-practicing bicycle according to the present embodiment with a part of the seat stay removed. FIG. 14 is an enlarged view showing the connecting portion of the seat stay of the ride-practicing bicycle according to this embodiment. FIG. 15 is an enlarged view showing the connection portion of the seat stay of the ride-practicing bicycle according to the present embodiment with a part of the seat stay removed.

The ride-practicing bicycle 501 differs from the ride-practicing bicycle 1 of the first embodiment in that the seat stays themselves are not detachable from the ride-practicing bicycle 501, but have a removable portion that can be removed from the seat stays. Other configurations of the ride-practicing bicycle 501 are the same as those of the ride-practicing bicycle 1 of the first embodiment.

As shown in FIGs. 12 to 15, the seat stay 550 is arranged between the rear wheel 300 side of the chain stay 130 and the upper portion of the seat tube 120. The seat stay 550 has one end detachably connected to the rear wheel 300 side of the chain stay 130 and the other end connected to the upper portion of the seat tube 120 by integral formation or welding. The seat stay 550 has a removable portion 551 that is removable from seat stay 550 in a portion between chain stay 130 on the rear wheel 300 side and the upper portion of seat tube 120.

As shown in FIG. 14, the removable portion 551 is formed in a convex shape (a protrusion protruding) toward the rear wheel 300 side when viewed from above. Further, as shown in FIG. 15, bolt insertion holes 553 having a thread is formed in the inner surface of the seat stay 550 that contacts the removable portion 551. This eliminates the need for a nut for connection of the removable portion 551, thereby reducing the number of parts.

The removable portion 551 is connected to the seat stay 550 with two bolts 552, for example. Specifically, the removable portion 551 is connected to the seat stay 550 by inserting the bolts 552 into the holes formed in the recessed portions on both sides thereof and by screwing the inserted bolts 552 into the bolt insertion holes 553, respectively.

As shown in FIGs. 13 and 15, the gap between the two ends of the seat stay 550 at the portion where the removable portion 551 is removed is formed wider than the width of the chain 500. As a result, the chain 500 can be attached and detached through the gap of the seat stay 550 from which the removable portion 551 is removed without cutting off the chain 500.

According to the ride-practicing bicycle 501 according to the present embodiment as described above, in addition to at least some of the advantages of the ride-practicing bicycle 1 of the first embodiment, the chain 500 can be easily attached and detached simply by removing the removable portion 551 of the seat stay 550.

In addition, according to the ride-practicing bicycle 501, the seat stay 550 is integrally formed or connected to the upper portion of the seat tube 120 by welding or the like, and there is no connecting portion by bolts or the like, so the vertical movement function when adjusting the saddle height is not hindered.

it will be apparent to those skilled in the art that various modifications and variations can be made in the present invention without departing from the spirit or scope of the invention. Thus, it is intended that the present invention cover modifications and variations that come within the scope of the appended claims and their equivalents. In particular, it is explicitly contemplated that any part or whole of any two or more of the embodiments and their modifications described above can be combined and regarded within the scope of the present invention.

## Claims

1. A ride-practicing bicycle, comprising:
a pedal unit;
a bicycle frame having a receiving portion for receiving the pedal unit at a portion of a seat tube of the bicycle frame;
a rear wheel having a sprocket;
a chain installed to be coupled with the pedal unit and the rear wheel,
wherein the pedal unit includes a rotatably mounted pedal crank to which a chain wheel is attached and has a connecting portion that is removably connected to the receiving portion of the bicycle frame, and the chain bridges and engages the chain wheel and the sprocket of the rear wheel, whereby the pedal unit and the chain are removably installed in the bicycle frame, and
wherein the bicycle frame has a seat stay on a side of the chain wheel, and an entirety or a portion of the seat stay is configured to be removable from the bicycle frame so as to facilitate attachment and removal of the pedal unit and the chain to and from the bicycle frame.

2. The ride-practicing bicycle according to claim 1, wherein the removable entirety or portion of the seat stay creates a gap greater than a width of the chain when removed so as to allow passage of the chain through the gap.

3. The ride-practicing bicycle according to claim 1, wherein the removable entirety or portion of the seat stay has a protrusion protruding towards the rear wheel in a plan view.

4. The ride-practicing bicycle according to claim 1, wherein the bicycle frame has a chain stay that rotatably supports the rear wheel on at least a side of the pedal unit.

5. The ride-practicing bicycle according to claim 4, wherein a branch portion extending obliquely forward and upward is provided on the chain stay on the side of the rear wheel, and a rear end of the seat stay is detachably fixed to the branch portion.

6. The ride-practicing bicycle according to claim 5, wherein the pedal unit further includes a chain cover that covers the chain, and the branch portion is provided outside the chain cover so as to overlap the chain cover in a side view.

7. The ride-practicing bicycle according to claim 4, wherein the pedal unit further includes a chain cover that covers the chain, and the chain cover has a through hole through which the chain stay is inserted from an outside rear side to an inside front side of the chain cover.

8. The ride-practicing bicycle according to claim 7, wherein the chain cover is separable into two pieces in a longitudinal direction, and the through hole is formed across the separable two pieces of the chain cover.

9. The ride-practicing bicycle according to claim 4, wherein a rear end of the seat stay is fixed to an axle of the rear wheel.

10. The ride-practicing bicycle according to claim 9, wherein the rear end of the seat stay is provided with an elongated slot that opens rearward, and a fixing member provided in the elongated hole fixes the rear end of the seat stay onto the axle of the rear wheel.

11. The ride-practicing bicycle according to claim 1, wherein the pedal unit further includes a chain cover that covers the chain, and the seat stay is attached to an outside of the chain cover.

12. The ride-practicing bicycle according to claim 1, wherein the seat stay is interchangeable according to a diameter of the chain wheel.

13. A bicycle frame to which a pedal unit and a chin are removably mounted, wherein the bicycle frame has a seat stay on a side at which a chain wheel is to be installed, and an entirety or a portion of the seat stay is configured to be removable from the bicycle frame so as to facilitate attachment and removal of the pedal unit and the chain to and from the bicycle frame.
